# EUROPEAN PATENT APPLICATION

(11) **EP 0 824 203 A2**
(43) Date of publication of application: **18.02.1998**
(21) Application number: 97306193.0
(22) Date of filing: 14.08.1997
(51) Int. Cl.: F16K 17/04, F16K 1/36

(54) **Valve**

(30) Priority: 14.08.1996 GB 9617053
(71) Applicant: FORT VALE ENGINEERING LIMITED, Nelson, Lancashire BB9 0SG (GB)
(72) Inventor: Fort, Edward Sagar, Chatburn, Near Clitheroe, Lancashire (GB); Smith, David Frederick Howard, Burnley, Lancashire, BB10 3JJ (GB)
(74) Representative: W.P. THOMPSON & CO.

(57) **Abstract**

A valve comprises a valve housing (10),an annular valve seat (12) and a valve closure plate (14) having a deformable annular seal (52), the valve being operable from a first, closed condition in which the valve closure plate (14) engages the valve seat and into a second, open condition in which the valve closure plate (14) is displaced from the valve seat. The valve closure plate (14) comprises first (14a) and second (14b) portions which are releasably securable together to retain the deformable seal (52) on the valve closure plate and the second portion (14b) of the valve closure member is removable with the valve in the closed condition to allow removal and/or replacement of the deformable seal (52).

## Description

The present invention relates to valves and in particular, but by no means exclusively, to so-called catastrophic pressure relief valves.

A valve typically comprises an annular valve seat and a valve closure plate which is movable into and out of engagement with the valve seat to close and open the valve. The valve closure plate normally carries a deformable seal which engages the valve seat to provide an efficient seal when the valve is closed. The deformable seal requires replacement periodically, which normally requires substantial dismantling of the valve. Whilst this can often be carried out as part of a routine servicing of the valve, it is not always convenient for such work to be carried out.

One particular case in which difficulties can arise is the replacement of pressure relief valves for ISO tank containers. It is a requirement that ISO tank containers be fitted with one or more pressure relief valves for the purpose of venting excess pressure within the tank container in conditions where the container might otherwise explode. A situation in which such pressure relief might occur is if the tank container is consumed in fire, hence the name "catastrophic" relief valve.

The construction and performance of such valves depends upon the use to which the tank container is to be put. However, in general terms it is a requirement that the valve should open extremely quickly at a designated set pressure and should only thereafter snap shut when the pressure has fallen to a second, lower set pressure. One such valve in common use has a valve body which in use is secured in an aperture in a reinforced so-called "foot plate" located at the uppermost portion of the tank container. The valve body extends into the container and has an annular valve seat located at the lower end of the valve body, well within the container. A pressure plate is urged into sealing engagement with the annular valve seat by means of one or more springs. Thus, if the pressure within the tank container (on the internal side of the valve seat) reaches a predetermined pressure, the force operating over the pressure plate is sufficient to lift the pressure plate from the valve seat against the restoring force of the spring or springs. Once the pressure plate has been lifted slightly from the valve seat, the internal pressure within the tank container is then applied over the whole of the face of the pressure plate including those portions of the pressure plate located radially outwardly of the valve seat. Thus, the pressure plate lifts rapidly and the valve "cracks" open. Only when the pressure has fallen to a predetermined lower pressure is the spring force sufficient to overcome the internal pressure within tank container, whereupon the pressure plate is forced back onto the valve seat.

The nature of such valves means that they are located at the uppermost portion of the tank container, which makes access very inconvenient. Known relief valves for tank containers require considerable dismantling to gain access to, and replace, the valve seal which is time consuming and troublesome, bearing in mind the location of the valve. For this reason, when the valve seals of known relief valves are to be replaced it is normal for the valve to be removed in order to facilitate the operation.

However, in order to remove the valve it is necessary first of all to empty and de-gas the tank container. Once the above operations have been completed the valve can be removed and can then be stripped down in order to replace the seal, re-assembled and then refitted in position on the tank container.

Moreover, ISO regulations require that whenever a pressure relief valve is removed and the same or a different valve is remounted on the tank container, it is necessary for the valve to be re-tested to ensure that the seal between the valve and the tank operates correctly, before the tank container is permitted to be loaded with product. This involves pressurising the tank container to a pressure of 1.3 times the normal working pressure to ensure that the valve will operate correctly when required.

The emptying and de-gassing of the tank container, removal of the valve, replacement of the valve seal, remounting of the valve and re-testing of the valve is a skilled job and takes a great deal of time. Consequently, the replacement of valve seals in pressure relief valves for ISO tank containers is a costly operation.

It is an object of the present invention to simplify the procedure of replacing a valve seal and thereby reduce the associated cost and down time of the valve.

In accordance with the present invention, there is provided a valve comprising an annular valve seat and a valve closure plate having a deformable annular seal, the valve being operable from a first, closed condition in which the valve closure plate engages the valve seat and into a second, open condition in which the valve closure plate is displaced from the valve seat, characterised in that the valve closure plate comprises first and second portions which are releasably securable together to retain the deformable seal on the valve closure plate and the second portion of the valve closure member is removable with the valve in the closed condition to allow removal and/or replacement of the deformable seal.

The deformable seal of such a valve can thus be replaced without removing the valve from its normal position, since the valve remains in its closed position throughout the procedure of replacement of the valve seal. Consequently, when such a valve is used as a pressure relief valve, for example, there is no need to go through the procedure of emptying and de-gassing the tank container, removing the valve, dismantling the valve, replacing the valve seal, remounting the valve and re-testing the valve. In particular, because the valve remains in position throughout the operation of replacing the valve seal there is no requirement to re-test the valve when it is remounted.

Preferably, the first portion of the valve closure plate engages the annular valve seat when the valve is in the closed condition.

Preferably, the valve closure plate is mounted on a member which is movably mounted with respect to the valve seat, e.g. mounted on a spindle which is slidably mounted within a valve housing.

Referring specifically again to relief valves for ISO tank containers, in order to provide an outlet for the relieved fluid within the tank container, the valve body must be provided with an exit route to atmosphere. (In fact, the relieved fluid may be fed to an overspill chamber but in the present specification reference to venting to atmosphere should be interpreted as including such alternatives.) Because of the fluid exit route, it is also possible for water, e.g. rainwater or sea water, to make its way in the reverse direction into the valve housing and lie within the valve on top of the pressure plate. This has the disadvantage that, in cold weather, the water can freeze, thus preventing the pressure plate from lifting from its valve seat and preventing the valve from carrying out its pressure relief duties. This problem can be particularly acute since, in order to provide the necessary spring force, the springs (and therefore the valve housing to enclose the springs) is necessarily relatively long and thus a considerable slug of ice (up to as much as 15cm in depth) can be formed within the valve housing. In order to avoid such problems, this type of valve should be filled with anti-freeze, which requires regular inspection to maintain it at the correct level.

Preferably, therefore, the valve closure plate is mounted on the opposite side of the valve seat from the member (e.g. the valve closure plate) on which the valve closure plate (e.g. the spindle) is mounted. More preferably, the member (e.g. the spindle) on which the valve closure plate is mounted is located on the upstream or inner side (i.e. the side to which pressure is applied) of the valve seat and the valve closure member is located on the downstream or outer side (i.e. the side to which pressurised fluid is exhausted).

This permits the valve seat to be located much nearer the outlet of the valve with the result that only a very small slug of ice can form externally of the pressure plate. Thus, any ice forming above the pressure plate will be much smaller than that of the prior art and will thus have a much smaller effect on the performance of the valve.

Preferably, the valve housing radially outwardly of the valve seat is outwardly tapered such that even if ice forms above the pressure plate any displacement of the pressure plate from the valve seat will automatically result in the formation of a fluid exhaust path to atmosphere.

Preferably, biassing means (e.g. one or more springs) are provided to bias the valve closure plate into engagement with the valve seat. Preferably, the biassing means (e.g. one or more springs) are located on the opposite side of the valve seat from the valve closure plate. For example, the biassing means may be mounted on the upstream or inner side (e.g. the side to which pressurised fluid is applied) of the valve seat and the valve closure plate is mounted on the downstream or outer side (e.g. the side to which pressurised fluid is exhausted) of the valve seat.

Preferably, the valve closure plate is displaceable from the valve seat by means of fluid pressure, e.g. fluid pressure within the housing.

By way of example only, a specific embodiment of the present invention will now be described, with reference to the accompanying drawings, in which:-
Fig. 1 is a cross-sectional side view of an embodiment of pressure relief valve in accordance with the present invention; and
Fig. 2 is a plan view of the valve shown in Fig. 1.

A pressure relief valve comprises a valve housing 10 having an annular valve seat 12. A pressure plate 14 located on the downstream (exterior) side of the valve seat 12 (i.e. the side of the valve seat to which fluid is exhausted) is urged into sealing engagement with the valve seat by means of two coiled compression springs 16, 18 located on the opposite upstream or inner side of the valve seat (i.e. the side to which pressurised fluid is applied). In very broad terms, when the internal pressure within the valve on the opposite upstream (internal) side of the valve seat is sufficient to overcome the force of the springs 16, 18, the pressure plate 14 is lifted from the valve seat 12. Once lifted from the valve seat, the pressure within the valve acts over the whole surface area of the pressure plate 14, including those portions radially outward of the valve seat, and thus the valve "cracks" open. When the spring force exceeds the force applied by the pressurised fluid the pressure plate 14 is then forced back into engagement with the valve seat.

The valve housing 10 comprises an upper valve housing portion 20, an annular securing flange 22 and a tubular spring housing portion 24. The upper valve housing portion 20 is provided with the internal annular valve seat 12 and is fixed to the annular securing flange 22 by means of eight equally spaced bolts 26, each passing through an aperture in an associated lobe 28 in the upper valve housing portion 20 into a respective tapped receiving bore 29 in the flange 22. The securing flange 22 is itself provided with eight further equally angularly spaced apertures 30 between pairs of adjacent lobes 28 of the upper valve housing portion 20, for securing the valve to an ISO tank container tank pad (not illustrated) by means of eight bolts.

It should also be noted that on the downstream (exterior) side of the valve seat 12 (i.e. the side of the valve seat to which gas is exhausted), the internal walls of the valve housing are flared upwardly. As will be explained, this further reduces the likelihood of problems associated with freezing and is also required to direct the flow of exhaust gas away from the tank.

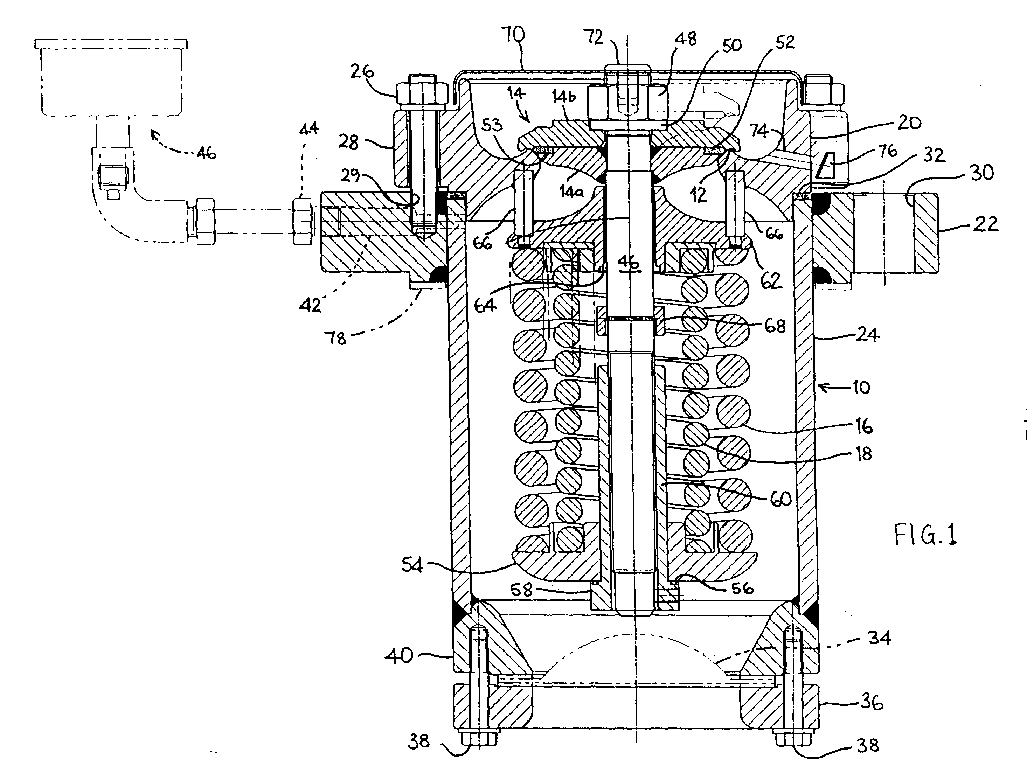

The upper end of the tubular spring housing 30 is welded into the central aperture of the annular flange 22 and the tubular spring housing 30 extends downwardly from the upper valve housing portion and the securing flange 22. The upper peripheral edge of spring housing 30 is held in sealing contact with the upper valve housing portion 20 by means of an annular PTFE seal 32. A burst disc 34 (illustrated in chain dot in Fig. 1) is mounted across the lower end of the valve housing by means of a burst disc support flange 36 having a plurality of bolts 38 extending into tapped blind bores in a mounting ring 40 welded to the inner (lower) end of the spring housing 30.

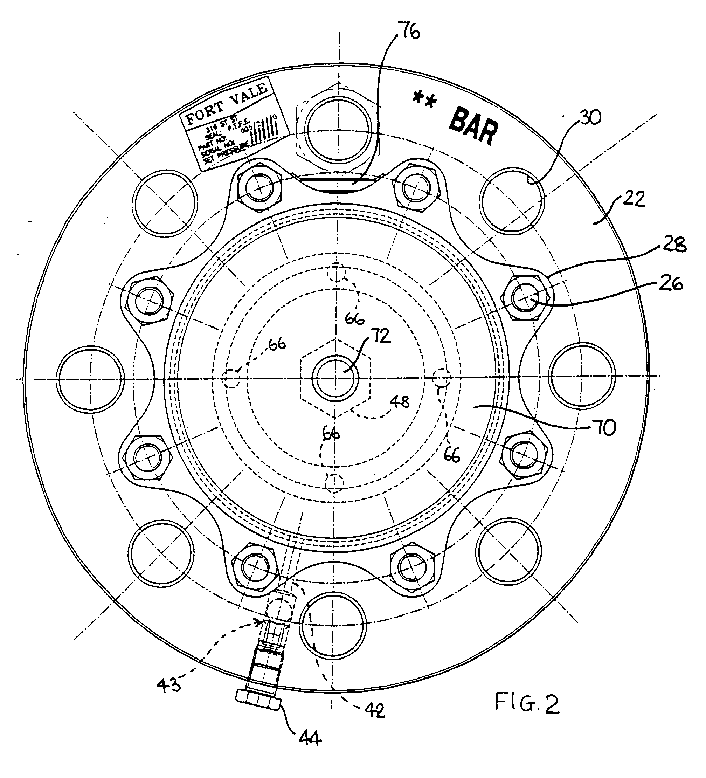

The securing flange 22 is provided with a radially extending bore 42 which connects the upstream (interior) side of the valve to the exterior via a non-return valve 43 (Fig. 2). The bore 42 may either be blocked off by means of a plug 44 or may be connected to a pressure gauge 46. The pressure gauge would normally be used to detect any build up of pressure resulting from damage to the burst disc 34.

The pressure plate is located on the downstream or outer side of the valve seat (i.e. the side to which gas is exhausted) and in the form of two pieces. The first piece comprises a base plate 14a which is welded to a valve spindle 46 which is coaxial with the longitudinal axis of the valve housing and located on the opposite, upstream or inner side of the valve seat. The other half of the pressure plate comprises a cover plate 14b, which is releasably securable to the spindle and to the base plate 14a by means of a nut 48 and a spring washer 50. As will be apparent from Fig. 1, the pressure plate also carries an annular PTFE seal 52 which is located, in use, between the two portions 14a, 14b of the pressure plate. In fact, the seal 52 is seated in a complementarily shaped peripheral annular groove 53 in the base portion 14a of the pressure plate and is held in position on the pressure plate by locating the cover plate 14b in position on the base plate 14a and releasably securing the two portions together by means of the nut 48 and spring washer 50. The diameter of the cover plate 14b is wider than that of the base plate 14a and seal 52 and the seal 52 is thereby held in position on the pressure plate. It will also be observed that the diameter and shape of the base plate 14a are such that if the seal 52 is removed with the valve in the closed condition, the base plate 14a will make sealing contact with the valve seat 12. This greatly facilitates the replacement of a valve seal, as will be explained.

The opposite end of the spindle is provided with an annular bottom spring pad 54. The spring pad 54 sits on the annular shoulder 56 of the enlarged head 58 of a generally tubular spring nut 60. The internal tubular wall of the spring nut 60 and the lower half of the spindle 46 are complementarily screw threaded, to secure the two together and to allow a measure of spring adjustment. The upper end of the spindle is slidable through a top spring pad 62 and a tubular spindle guide 64 which is a press fit within the top spring pad. The top spring pad 62 is fixedly located with respect to the valve housing by means of four equally angularly spaced mounting pins 66 projecting downwardly from the undersurface of the valve housing forming the valve seat 12. The first and second compression springs 16, 18 extend between the top and bottom spring pads 54, 62. The upward displacement of the valve spindle 46 (and the pressure plate 14) is limited by an annular stop ring 68 which is seated on an annular shoulder 69 located above the threaded portion of the spindle 46 and is engageable with the undersurface of the top spring pad 62.

A cover plate 70 is secured to the upper end of the spindle by means of an Allen bolt 72 which is received in a correspondingly threaded blind bore in the upper end of the spindle 46.

It will be noted that a drain bore 74, inclined downwardly from the lowermost portion of the valve housing surrounding the valve seat 12, communicates with the exterior of the valve housing. A baffle 76 welded between the lugs 26 and either side of the drain bore 74 is also provided.

In use, the valve housing is secured into the aperture of a conventional tank pad by means of bolts passing through the apertures 28 in the securing flange 22. An annular seal 78 on the under surface of the flange 22 ensures a fluid-tight connection with the tank pad. The valve is normally installed with the spindle aligned vertically, with the cover 70 uppermost.

If the pressure within the tank container is such that the upward force on the pressure plate exceeds that of the compression spring 16, 18, the pressure plate 14 is lifted from its valve seat. As with conventional catastrophic relief valves, once the pressure plate 14 has been lifted from the valve seat the pressure is applied over the whole face of the pressure plate and thus the valve then "cracks" open very quickly. High pressure gas is then guided by the internal walls of the upper valve housing portion 20 out of the valve through the gap between the upper peripheral edge of the portion 20 and the cover 70. Again, as for conventional valves, when the restoring force of the spring exceeds the force on the under surface of the pressure plate 14 the pressure plate 14 is reseated on the valve seat 12.

In contrast to the prior art arrangements, replacement of a valve seal 52 is very straightforward. In order to do so, the cover plate 70 is removed by unscrewing the Allen bolt 72 from the spindle 46. The securing nut 48 is then unscrewed, thereby allowing the cover plate 14b of the pressure plate 14 to be removed. This allows direct access to the seal 52 which may then be simply lifted from its groove 53 in the base plate 14a. A replacement seal 52 may then simply be inserted into the groove in the base plate, and the cover plate 14b and the outer cover plate 70 replaced by means of the bolts 48, 72 respectively.

As mentioned previously, when the seal 52 is removed the valve still remains in its closed condition, because the base plate 14a of the pressure plate 14 makes sealing contact with the valve seat 12 and thus the valve is kept operational throughout the replacement of the valve seal 52. The location of the valve pressure plate 14 on the downstream (exhaust) side and location of the biassing springs 16, 18 and spindle 46 on the upstream (pressurised) side of the annular valve seat also enables the pressure plate to be located adjacent to, or in the vicinity of, the outlet of the valve, as shown, which also greatly facilitates seal replacement as compared with the prior art.

Moreover, the fact that the base plate 14a of the pressure plate seals against the valve seat when the seal 52 is removed, thereby keeping the valve operational, and the fact that replacement of the seal is greatly facilitated, avoids the necessity for removing the valve from its location in order to replace the valve seal. As discussed previously, this avoids the necessity for emptying and de-gassing the valve, removal and dismantling of the valve, re-assembly and remounting of the valve and re-testing of the valve, which significantly reduces the time, cost and complexity involved in replacing a valve seal 52.

Moreover, in contrast to the prior art arrangement, it will be noted that only a very small volume above the pressure plate 14 exists in which water can enter and freeze. Indeed, in general any water entering the volume above the pressure plate 14 will drain out of the valve housing via the drain port 74. (The baffle 76 is provided to direct any high pressure fluid upwardly in the event of operation of the valve.) Thus, the amount of ice which can form above the movable valve plate is very limited as compared with known valves, in which a slug of ice having a length equal to that of the compression springs can form unless anti-freeze is inserted into the valve.

As mentioned above, the internal walls of the valve housing radially outwardly and upwardly of the valve seat 12 are flared upwardly. Thus, even if a slug of ice forms above the pressure plate, as soon as the pressure plate lifts from the valve seat 12 an exit route is automatically formed outwardly of the slug of ice.

Thus, with the present invention, the replacement of the valve seal 52 is greatly simplified and avoids the necessity for removing the valve from the tank container in order to effect replacement. Moreover, the risk of ice forming is greatly reduced, to the extent that it is not necessary to fill the valve with anti-freeze. Even if ice does form above the pressure plate, the construction of the valve is such that only a very small slug of ice can form, and even then it is easily displaced by the flow from the valve to enable high pressure fluid to escape.

The invention is not restricted to the details of the foregoing embodiment. For example, although a detailed description of a pressure relief valve for a tank container has been given, the invention is applicable to many other types of valve.

## Claims

1. A valve comprising an annular valve seat (12) and a valve closure plate (14) having a deformable annular seal (52), the valve being operable from a first, closed condition in which the valve closure plate (14) engages the valve seat and into a second, open condition in which the valve closure plate (14) is displaced from the valve seat, characterised in that the valve closure plate (14) comprises first (14a) and second (14b) portions which are releasably securable together to retain the deformable seal (52) on the valve closure plate and the second portion (14b) of the valve closure member is removable with the valve in the closed condition to allow removal and/or replacement of the deformable seal (52).

2. A valve as claimed in claim 1, wherein the first portion (14a) of the valve closure plate (14) engages the annular valve seat (12) when the valve is in the closed condition and the deformable seal (52) is not present.

3. A valve as claimed in claim 1 or claim 2, wherein the valve closure plate (14) is mounted on a member (46) which is movably mounted with respect to the valve seat (12).

4. A valve as claimed in claim 3, wherein the valve closure plate (14) is mounted on a spindle (46) which is slidably mounted with respect to the valve seat (12).

5. A valve as claimed in claim 3 or claim 4, wherein the member (46) on which the valve closure plate (14) is mounted is located on the opposite side of the valve seat (12) from the valve closure plate (14).

6. A valve as claimed in any of claims 3 to 5, wherein the member (46) on which the valve closure plate (14) is mounted is located on the upstream or inner side of the annular valve seat (12) and the valve closure plate (14) is mounted on the downstream or outer side of the annular valve seat (12).

7. A valve as claimed in any of claims 1 to 6, comprising biassing means (16,18) for biassing the valve closure plate into engagement with the valve seat (12).

8. A valve as claimed in claim 7, wherein the biassing means (16,18) comprises a spring.

9. A valve as claimed in claim 7 or claim 8, wherein the biassing means (16, 18) is located on the opposite side of the valve seat (12) from the valve closure plate (14).

10. A valve as claimed in any of claims 7 to 9, wherein the valve closure plate (14) is displaceable from the valve seat (12) by means of fluid pressure.

11. A valve as claimed in claim 10, wherein the valve closure plate (14) is displaceable from the valve seat (12) by means of fluid pressure within the valve.

12. A valve as claimed in any of claims 7 to 11, wherein the valve closure plate (14) is located on the downstream or outer side of the annular valve seat (12) and the biassing means (16, 18) is located on the upstream or inner side of the valve seat (12).

13. A valve as claimed in any of claims 7 to 12, wherein the biassing means (16, 18) extends between a first plate (54) movable with the member (46) on which the valve closure plate (14) is mounted and a second plate (62) which is fixed with respect to the valve seat (12).

14. A valve as claimed in any of the preceding claims, further comprising a housing (10) within which the valve seat (12) and valve closure plate (14) are mounted.

15. A valve as claimed in any of the preceding claims, wherein the internal wall of the valve housing upwardly of, and radially outward of, the valve seat is flared outwardly.

16. A valve as claimed in any of the preceding claims, comprising a cover plate (70) which covers the valve closure plate.

17. A valve as claimed in any of the preceding claims, wherein the valve closure plate is located adjacent to, or in the vicinity of, the outlet of the valve.
